# EUROPEAN PATENT SPECIFICATION

(11) **EP 2 983 382 B1**
(45) Date of publication and mention of the grant of the patent: **22.11.2017**
(21) Application number: 13881292.0
(22) Date of filing: 03.04.2013
(51) Int. Cl.: H04W 4/06, H04W 72/00, H04L 12/18, H04W 88/02, H04W 88/08

(54) **SERVICE INDICATION PROCESSING METHODS, USER EQUIPMENT AND BASE STATION**
VERFAHREN ZUR VERARBEITUNG VON DIENSTANZEIGEN, NUTZERGERÄT UND BASISSTATION
DES PROCÉDÉS DE TRAITEMENT D'INDICATION DE SERVICE, ÉQUIPEMENT D'UTILISATEUR ET STATION DE BASE

(43) Date of publication of application: 10.02.2016
(73) Proprietor: Huawei Technologies Co., Ltd., Longgang District Shenzhen, Guangdong 518129 (CN)
(72) Inventor: ZHAO, Junhui, Shenzhen Guangdong 518129 (CN); HU, Zhenxing, Shenzhen Guangdong 518129 (CN); QUAN, Wei, Shenzhen Guangdong 518129 (CN); JI, Pengyu, Shenzhen Guangdong 518129 (CN); ZHANG, Jian, Shenzhen Guangdong 518129 (CN); ZENG, Qinghai, Shenzhen Guangdong 518129 (CN); DAI, Mingzeng, Shenzhen Guangdong 518129 (CN)
(74) Representative: Gill Jennings & Every LLP
(86) International application number: PCT/CN2013/073734
(87) International publication number: WO 2014/161186

(56) References cited:
- CN-A- 102 118 355
- CN-A- 102 917 311
- US-A1- 2010 278 150
- US-A1- 2013 039 250
- US-A1- 2013 039 250
- RAN3 (HUAWEI ET AL: "Support of MBMS Service Continuity", 3GPP DRAFT; 36300_CR0493_(REL-11)_R2-124281_R3-121872, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20120813 - 20120817 9 September 2012 (2012-09-09), XP050664162, Retrieved from the Internet: URL:http://www.3gpp.org/ftp/tsg_ran/WG2_RL 2/Specifications/201209_draft_specs_after_ RAN_57/ [retrieved on 2012-09-09]
- CATT: "Specification Impacts of Optional MBMS Service Continuity Function", 3GPP DRAFT; R2-130118 SPECIFICATION IMPACTS OF OPTIONAL MBMS SERVICE CONTINUITY FUNCTION, 3RD GENERATION PARTNERSHIP PROJECT (3GPP), MOBILE COMPETENCE CENTRE ; 650, ROUTE DES LUCIOLES ; F-06921 SOPHIA , vol. RAN WG2, no. St. Julian; 20130128 - 20130201 18 January 2013 (2013-01-18), XP050668015, Retrieved from the Internet: URL:http://www.3gpp.org/ftp/tsg_ran/WG2_RL 2/TSGR2_81/Docs/ [retrieved on 2013-01-18]
- Orange, AT&T, DISH Network, Qualcomm Incorporated: "eMBMS support in New Carrier Type", 3GPP DRAFT; R1-130658, 3RD GENERATION PARTNERSHIP PROJECT (3GPP), MOBILE COMPETENCE CENTRE ; 650, ROUTE DES LUCIOLES ; F-06921 SOPHIA , 18 January 2013 (2013-01-18), pages 1-1, XP002754140, Retrieved from the Internet: URL:http://www.3gpp.org/DynaReport/TDocExM tg--R1-72--30041.htm [retrieved on 2016-02-10]
- "3rd Generation Partnership Project; Technical Specification Group Services and System Aspects; Multimedia Broadcast/Multicast Service (MBMS); Architecture and functional description (Release 9)", 3GPP STANDARD; 3GPP TS 23.246, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.5.0, 10 June 2010 (2010-06-10), pages 1-65, XP050441560, [retrieved on 2010-06-10]

## Description

### TECHNICAL FIELD

Embodiments of the present invention relate to communications technologies, and in particular, to service indication processing methods, to a user equipment and to a base station.

### BACKGROUND

A multimedia broadcast multicast service (Multimedia Broadcast Multicast Service, MBMS for short) is introduced in the fourth generation mobile telecommunications system such as release 10 of a long term evolution (LTE) system of Release 10 (Long Term Evolution Release 10, LTE R10 for short) and is enhanced in R10 and R11 separately. The MBMS supports two modes: a multimedia broadcast service and a multimedia multicast service, where multimedia video information may be broadcast directly to all users, or may be sent to a group of paying subscribers for watching, which may help an operator deploy multiple commercial applications such as multimedia advertising, free or paid television channels, and multimedia group messaging, so that the operator can deploy mobile phone television services at lower network deployment costs.

In the prior art, a smallest coverage unit of the MBMS is a cellular cell of a legacy carrier type (LCT), which can provide users at different locations with rich services. Because each cell of a cellular network has a relative small coverage range and more precise network planning, different content can be broadcast separately in different areas of the network. However, a new carrier type (NCT) cell is introduced in the existing LTE R12, and continuity of receiving, by user equipment (UE), an MBMS service of an NCT cell cannot be ensured.

US 2013/0039250 A1 to Mediatek, Inc. relates to a method to indicate mbms reception status to enable service continuity.

### SUMMARY

Embodiments of the present invention provide service indication processing methods, a user equipment and a base station, which are used to ensure continuity of receiving, by UE, an MBMS service of an NCT cell.

Various aspects and features of the present invention are as recited in the claims.

According to the service indication processing methods, the user equipment and the base station provided in the embodiments, a UE receives a system message sent by a base station corresponding to an LCT cell, where the system message includes information about an NCT frequency and MBMS SAI information corresponding to the information about the NCT frequency, and the UE performs, according to the system message, indication processing on an MBMS service that is being received or of interest, so that continuity of receiving, by the UE, an MBMS service of an NCT cell can be ensured.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a service indication processing method according to the present invention;
FIG. 2 is a flowchart of Embodiment 2 of a service indication processing method according to the present invention;
FIG. 3 is a flowchart of Embodiment 3 of a service indication processing method according to the present invention;
FIG. 4 is a flowchart of Embodiment 4 of a service indication processing method according to the present invention;
FIG. 5 is a flowchart of Embodiment 5 of a service indication processing method according to the present invention;
FIG. 6 is a flowchart of Embodiment 6 of a service indication processing method according to the present invention;
FIG. 7 is a flowchart of Embodiment 1 of a method for service counting in a new carrier type cell according to the present invention;
FIG. 8 is a flowchart of Embodiment 2 of a method for service counting in a new carrier type cell according to the present invention;
FIG. 9 is a flowchart of Embodiment 3 of a method for service counting in a new carrier type cell according to the present invention;
FIG. 10 is a flowchart of Embodiment 4 of a method for service counting in a new carrier type cell according to the present invention;
FIG. 11 is a flowchart of Embodiment 1 of user equipment according to the present invention;
FIG. 12 is a schematic structural diagram of Embodiment 2 of user equipment according to the present invention;
FIG. 13 is a schematic structural diagram of Embodiment 1 of a base station corresponding to a legacy carrier type according to the present invention; and
FIG. 14 is a schematic structural diagram of Embodiment 2 of a base station corresponding to a legacy carrier type cell according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

The technical solutions provided in the present invention relate to an LTE system, and further relate to an LTE system in which an NCT cell or an NCT frequency is introduced in an access network. The NCT cell or the NCT frequency cannot work independently, that is, the NCT cell or the NCT frequency needs to rely on an existing non-NCT LCT cell or LCT frequency. Multiple NCT cells or NCT frequencies may be configured for one LCT cell or one LCT frequency. The present invention is applicable to a scenario in which a base station corresponding to an LCT cell sends, to UE, information about an NCT frequency supporting an MBMS and information that is about a service area identity of a multimedia broadcast multicast service (MBMS Service Area Identity, MBMS SAI for short) and corresponds to the information about the NCT frequency, so that the UE performs, according to a system message, indication processing on an MBMS service that is being received or of interest, thereby ensuring continuity of receiving an MBMS service of an NCT cell.

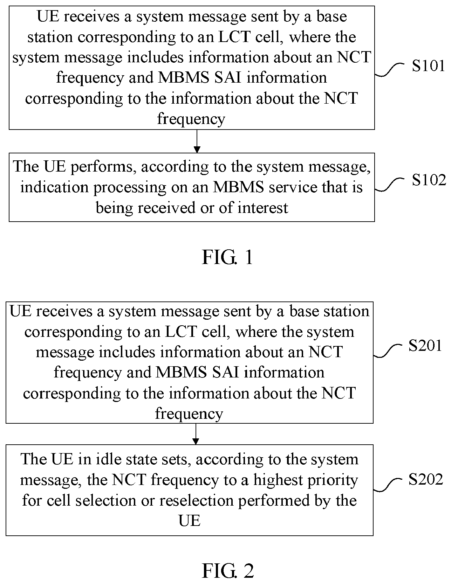

FIG. 1 is a flowchart of Embodiment 1 of a service indication processing method according to the present invention. As shown in FIG. 1, the service indication processing method in this embodiment includes:
S101. UE receives a system message sent by a base station corresponding to an LCT cell, where the system message includes information about an NCT frequency and MBMS SAI information corresponding to the information about the NCT frequency.

Specifically, the LCT cell or an LCT frequency may provide assistance for an NCT cell in supporting an MBMS service. That the LCT cell or an LCT frequency may provide assistance for an NCT cell in supporting an MBMS service may include that the NCT cell sends MBMS configuration information of the NCT cell to the UE by using the base station corresponding to the LCT cell and the base station corresponding to the LCT cell notifies the UE of the LCT cell or the LCT frequency on which the UE needs to camp for receiving an MBMS of the NCT cell. The system message in this embodiment may be a broadcast message. The information about the NCT frequency and the MBMS SAI information corresponding to the information about the NCT frequency in this embodiment may be carried in a system information block (System Information Block, SIB for short) SIB 15 or a newly defined SIB of the system message. The information about the NCT frequency may be an NCT frequency or a list of NCT frequencies. The MBMS SAI information may be an MBMS SAI or an MBMS SAI list.

Optionally, the system message further includes at least one type of the following information:
identity information of an NCT cell;
an LCT frequency that provides assistance for the NCT cell or the NCT frequency in supporting the MBMS service; and
identity information of an LCT cell that provides assistance for the NCT cell or the NCT frequency in supporting the MBMS service.

The identity information of the NCT cell may include an ID of the NCT cell or an ID list of NCT cells.

Because the NCT cell or the NCT frequency cannot work independently, the NCT cell or the NCT frequency requires assistance of the LCT cell or the LCT frequency in supporting the MBMS service. The system message may further include the LCT frequency or the identity information of the LCT cell that provides assistance for the NCT cell in supporting the MBMS service, where the identity information of the LCT cell may be an ID of an LCT cell.

Optionally, resources of the NCT frequency are all used to support the MBMS and the system message may further include resource indication information or resource configuration information.

The resource indication information may be used to indicate that the resources of the NCT frequency are all used to support the MBMS, and used to indicate a manner of receiving the MBMS. The resource configuration information is used to configure the resources of the NCT frequency.

Optionally, the resource indication information may include at least one type of the following information:
an indication of supporting multiple-input multiple-output;
an indication of supporting a reference signal; and
an indication of supporting a transfer mode; and
the resource configuration information may include at least one type of the following information:
   a configuration of multiple-input multiple-output;
   a configuration of a reference signal; and
   a configuration of a transfer mode.

S102. The UE performs, according to the system message, indication processing on an MBMS service that is being received or of interest.

Specifically, the UE may perform, according to information included in the received system message, the indication processing on the MBMS service that is being received or of interest, so that the UE or the base station determines a frequency corresponding to the MBMS service that is being received or of interest, and further, the MBMS service that is being received or of interest is preferentially received, thereby ensuring continuity of a service. For example, UE in idle state and UE in connected state may perform, according to the information included in the received system message, different indication processing on the MBMS service that is being received or of interest. If a frequency corresponding to an MBMS service that the UE is receiving or is interested in is an NCT frequency, the UE in idle state preferentially selects or reselects a cell in the NCT frequency during a cell selection or cell reselection process and the UE in connected state may send MBMS interest indication information including the NCT frequency or the list of NCT frequencies to the base station corresponding to the LCT cell, so that the UE in connected state may be handed over to a cell in the NCT frequency during a cell handover, and continuity of receiving, by the UE, the MBMS service that is being received or of interest can be ensured during cell selection or reselection and a cell handover.

According to the service indication processing method provided in this embodiment, UE receives a system message sent by a base station corresponding to an LCT cell, where the system message includes information about an NCT frequency and MBMS SAI information corresponding to the information about the NCT frequency, and the UE performs, according to the system message, indication processing on an MBMS service that is being received or of interest, so that continuity of receiving, by the UE, an MBMS service of an NCT cell can be ensured.

FIG. 2 is a flowchart of Embodiment 2 of a service indication processing method according to the present invention. As shown in FIG. 2, in the service indication processing method in this embodiment, a frequency corresponding to an MBMS service that UE is receiving or is interested in is an NCT frequency. A specific implementation manner in which the UE in idle state performs, according to a received system message, indication processing on the MBMS service that is being received or of interest is described, including:
S201. The UE receives a system message sent by a base station corresponding to an LCT cell, where the system message includes information about the NCT frequency and MBMS SAI information corresponding to the information about the NCT frequency.

For description of the system message in this embodiment, reference may be made to the embodiment shown in FIG. 1, and details are not described herein again.

S202. The UE in idle state sets, according to the system message, the NCT frequency to a highest priority for cell selection or reselection performed by the UE.

Specifically, the UE in idle state sets, to the highest priority for the cell selection or the reselection performed by the UE, a frequency corresponding to the MBMS service that is being received or of interest, so that it can be ensured that the UE in idle state preferentially selects or reselects a cell on the frequency corresponding to the MBMS service that the UE is receiving or is interested in during a cell selection or cell reselection process. The frequency corresponding to the MBMS service that is being received or of interest may be an intra-frequency LCT frequency or an inter-frequency LCT frequency, where the intra-frequency LCT frequency or the inter-frequency LCT frequency is adjacent to the LCT cell, or may be an NCT frequency. In this embodiment, the frequency corresponding to the MBMS service that the UE is receiving or is interested in is an NCT frequency. Because the LCT cell or an LCT frequency provides assistance for an NCT cell or the NCT frequency in supporting the MBMS service, in some scenarios in which the UE needs to camp on the LCT cell that provides assistance for the NCT cell or the NCT frequency in supporting the MBMS service, the following two manners may also be used in S202:
Manner 1: The UE in idle state sets, according to the system message, the LCT frequency to the highest priority for the cell selection or the reselection performed by the UE, where LCT frequency provides assistance for the NCT frequency in supporting the MBMS service.
Manner 2: The UE in idle state sets, according to the system message, the NCT frequency and the LCT frequency to the highest priority for cell selection or reselection performed by the UE, where the LCT frequency provides assistance for the NCT frequency in supporting the MBMS service.

According to a method for processing a service of an NCT cell provided in this embodiment, UE receives a system message sent by a base station corresponding to an LCT cell, where the system message includes information about an NCT frequency and MBMS SAI information corresponding to the information about the NCT frequency, and the UE in idle state sets, according to the system message, the NCT frequency to a highest priority for cell selection or reselection performed by the UE, so that continuity of receiving, by the UE in idle state, an MBMS service can be ensured.

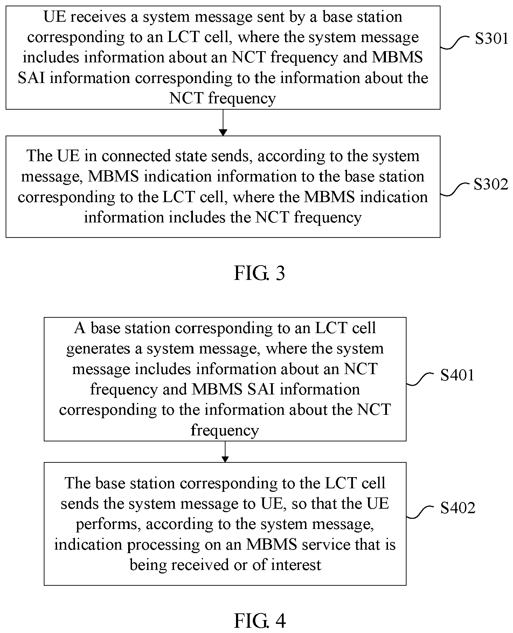

FIG. 3 is a flowchart of Embodiment 3 of a service indication processing method according to the present invention. As shown in FIG. 3, in the service indication processing method in this embodiment, a frequency corresponding to an MBMS service that UE is receiving or is interested in is an NCT frequency. A specific implementation manner in which the UE in connected state performs, according to a received system message, indication processing on the MBMS service that is being received or of interest is described, including:

S301. The UE receives a system message sent by a base station corresponding to an LCT cell, where the system message includes information about the NCT frequency and MBMS SAI information corresponding to the information about the NCT frequency.

For description of the system message in this embodiment, reference may be made to the embodiment shown in FIG. 1, and details are not described herein again.

S302. The UE in connected state sends, according to the system message, MBMS indication information to the base station corresponding to the LCT cell, where the MBMS indication information includes the NCT frequency.

Specifically, the UE in connected state may send MBMS indication information including the NCT frequency or a list of NCT frequencies to the base station corresponding to the LCT cell, so that the UE in connected state may be handed over to a cell in the NCT frequency during a cell handover, and continuity of receiving, by the UE in connected state, an MBMS service can be ensured.

According to the method for processing a service of an NCT cell provided in this embodiment, UE receives a system message sent by a base station corresponding to an LCT cell, where the system message includes information about an NCT frequency and MBMS SAI information corresponding to the information about the NCT frequency, and the UE in connected state sends, according to the system message, MBMS indication information to the base station corresponding to the LCT cell, where the MBMS indication information includes the NCT frequency, so that continuity of receiving, by the UE in connected state, an MBMS service can be ensured.

FIG. 4 is a flowchart of Embodiment 4 of a service indication processing method according to the present invention. As shown in FIG. 4, the service indication processing method in this embodiment includes:
S401. A base station corresponding to an LCT cell generates a system message, where the system message includes information about an NCT frequency and MBMS SAI information corresponding to the information about the NCT frequency.

Optionally, the system message further includes at least one type of the following information:
identity information of an NCT cell;
an LCT frequency that provides assistance for the NCT cell or the NCT frequency in supporting an MBMS service; and
identity information of an LCT cell that provides assistance for the NCT cell or the NCT frequency in supporting the MBMS service.

The identity information of the NCT cell may include an ID of the NCT cell or an ID list of NCT cells.

Because the NCT cell or the NCT frequency cannot work independently, the NCT cell or the NCT frequency requires assistance of the LCT cell or the LCT frequency in supporting the MBMS service. The system message may further include the LCT frequency or the identity information of the LCT cell, where the LCT frequency or the LCT cell provides assistance for the NCT cell in supporting the MBMS service, and the identity information of the LCT cell may be an ID of an LCT cell.

Optionally, resources of the NCT frequency are all used to support the MBMS and the system message may further include resource indication information or resource configuration information.

The resource indication information may be used to indicate that the resources of the NCT frequency are all used to support the MBMS, and used to indicate a manner of receiving the MBMS. The resource configuration information is used to configure the resources of the NCT frequency.

Optionally, the resource indication information may include at least one type of the following information:
an indication of supporting multiple-input multiple-output;
an indication of supporting a reference signal; and
an indication of supporting a transfer mode; and
the resource configuration information may include at least one type of the following information:
   a configuration of multiple-input multiple-output;
   a configuration of a reference signal; and
   a configuration of a transfer mode.

S402. The base station corresponding to the LCT cell sends the system message to UE, so that the UE performs, according to the system message, indication processing on an MBMS service that is being received or of interest.

Specifically, the UE may perform, according to information included in the system message received from the base station corresponding to the LCT cell, indication processing on the MBMS service that is being received or of interest. UE in idle state and UE in connected state may perform, according to the information included in the received system message, different indication processing on the MBMS service that is being received or of interest. If a frequency corresponding to an MBMS service that the UE is receiving or is interested in is an NCT frequency, the UE in idle state preferentially selects or reselects a cell in the NCT frequency during a cell selection or cell reselection process and the UE in connected state may send MBMS interest indication information including the NCT frequency or a list of NCT frequencies to the base station corresponding to the LCT cell, so that the UE in connected state may be handed over to a cell in the NCT frequency during a cell handover, and continuity of receiving, by the UE, the MBMS service that is being received or of interest can be ensured during cell selection or reselection and a cell handover.

In the service indication processing method provided in this embodiment, a base station corresponding to an LCT cell generates a system message, where the system message includes information about an NCT frequency and MBMS SAI information corresponding to the information about the NCT frequency, and the base station corresponding to the LCT cell sends the system message to UE, so that the UE performs, according to the system message, indication processing on an MBMS service that is being received or of interest, and continuity of receiving, by the UE, an MBMS service of an NCT cell can be ensured.

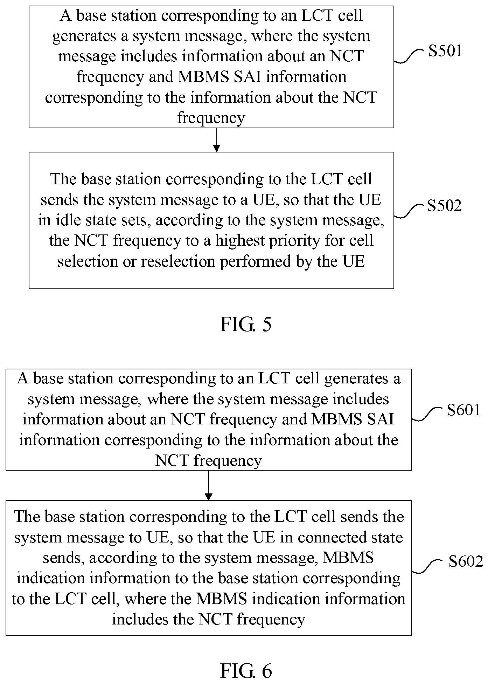

FIG. 5 is a flowchart of Embodiment 5 of a service indication processing method according to the present invention. As shown in FIG. 5, in the service indication processing method in this embodiment, a frequency corresponding to an MBMS service that UE is receiving or is interested in is an NCT frequency. A specific implementation manner in which the UE in connected state performs, according to a received system message, indication processing on the MBMS service that is being received or of interest is described, including:
S501. A base station corresponding to an LCT cell generates a system message, where the system message includes information about the NCT frequency and MBMS SAI information corresponding to the information about the NCT frequency.

For description of the system message in this embodiment, reference may be made to the embodiment shown in FIG. 4, and details are not described herein again.

S502. The base station corresponding to the LCT cell sends the system message to UE, so that the UE in idle state sets, according to the system message, the NCT frequency to a highest priority for cell selection or reselection performed by the UE.

In this embodiment, the frequency corresponding to the MBMS service that the UE is receiving or is interested in is an NCT frequency. Because the LCT cell or an LCT frequency provides assistance for an NCT cell or the NCT frequency in supporting the MBMS service, in some scenarios in which the UE needs to camp on the LCT cell that provides assistance for the NCT cell or the NCT frequency in supporting the MBMS service, the following two manners may also be used in S502:
Manner 1: The base station corresponding to the LCT cell sends the system message to the UE, so that the UE in idle state sets, according to the system message, the LCT frequency to the highest priority for cell selection or reselection performed by the UE, where the LCT frequency provides assistance for the NCT frequency in supporting the MBMS service.
Manner 2: The base station corresponding to the LCT cell sends the system message to the UE, so that the UE in idle state sets, according to the system message, the NCT frequency and the LCT frequency to the highest priority for cell selection or reselection performed by the UE, where the LCT frequency provides assistance for the NCT frequency in supporting the MBMS service.

In the method for processing a service of an NCT cell provided in this embodiment, a base station corresponding to an LCT cell generates a system message, where the system message includes information about an NCT frequency and MBMS SAI information corresponding to the information about the NCT frequency, and the base station corresponding to the LCT cell sends the system message to UE, so that the UE in idle state sets, according to the system message, the NCT frequency to a highest priority for cell selection or reselection performed by the UE, and continuity of receiving, by the UE in idle state, an MBMS service can be ensured.

FIG. 6 is a flowchart of Embodiment 6 of a service indication processing method according to the present invention. As shown in FIG. 6, in the service indication processing method in this embodiment, a frequency corresponding to an MBMS service that UE is receiving or is interested in is an NCT frequency. A specific implementation manner in which the UE in connected state performs, according to a received system message, indication processing on the MBMS service that is being received or of interest is described, including:
S601. A base station corresponding to an LCT cell generates a system message, where the system message includes information about the NCT frequency and MBMS SAI information corresponding to the information about the NCT frequency.

For description of the system message in this embodiment, reference may be made to the embodiment shown in FIG. 4, and details are not described herein again.

S602. The base station corresponding to the LCT cell sends the system message to the UE, so that the UE in connected state sends, according to the system message, MBMS indication information to the base station corresponding to the LCT cell, where the MBMS indication information includes the NCT frequency.

According to the method for processing a service of an NCT cell provided in this embodiment, a base station corresponding to an LCT cell generates a system message, where the system message includes information about an NCT frequency and MBMS SAI information corresponding to the information about the NCT frequency, and the base station corresponding to the LCT cell sends the system message to UE, so that the UE in connected state sends, according to the system message, MBMS indication information to the base station corresponding to the LCT cell, where the MBMS indication information includes the NCT frequency, and continuity of receiving, by the UE in connected state, an MBMS service can be ensured.

The following embodiment describes a counting procedure of an NCT cell in an LTE system in which an NCT cell is introduced in an access network. The NCT cell cannot work independently, for example, there is no physical downlink control channel (Physical Downlink Control Channel, PDCCH for short) in the NCT cell. This embodiment is applicable to a scenario in which an LCT cell assists the NCT cell in implementing a counting procedure.

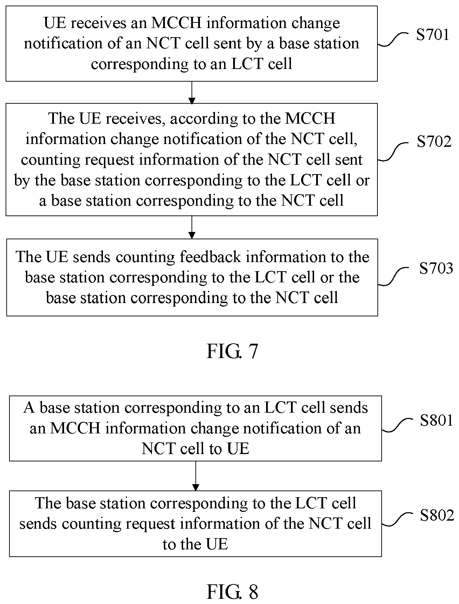

FIG. 7 is a flowchart of Embodiment 1 of a method for service counting in a new carrier type cell according to the present invention. As shown in FIG. 7, the method for service counting in a new carrier type cell in this embodiment includes:
S701. UE receives an MCCH information change notification of an NCT cell sent by a base station corresponding to an LCT cell.

Specifically, the multicast control channel (Multicast Control Channel, MCCH for short) information change notification of the NCT cell sent to the UE is used to notify the UE that the MCCH information of the NCT cell is changed, and then counting request information is sent to the UE.

S702. The UE receives, according to the MCCH information change notification of the NCT cell, counting request information of the NCT cell sent by the base station corresponding to the LCT cell or a base station corresponding to the NCT cell.

Specifically, the counting request information may be sent to the UE by the base station corresponding to the LCT cell or the base station corresponding to the NCT cell. If the counting request information is sent to the UE by the base station corresponding to the LCT cell, MBMS counting request information that is sent by a multi-cell/multicast coordination entity (Multi-Cell/Multicast Coordination Entity, MCE for short) and received by the base station corresponding to the LCT cell needs to include NCT information and area identity information of a multimedia broadcast multicast service single frequency network (Multimedia Broadcast multicast service Single Frequency Network, MBSFN for short). The NCT information may be identity information of the NCT cell or identity information of an NCT carrier frequency.

S703. The UE sends counting feedback information of the NCT cell to the base station corresponding to the LCT cell or the base station corresponding to the NCT cell.

Specifically, if the UE supports receiving of an MBMS service in the NCT cell, the UE may send the counting feedback information to the base station corresponding to the LCT cell or the base station corresponding to the NCT cell, so that the base station corresponding to the LCT cell or the base station corresponding to the NCT cell collects statistics about a feedback of the UE and reports the feedback to the MCE.

It may be understood that if the UE does not support receiving of an MBMS service in the NCT cell, the UE may do not perform S703.

In this embodiment, because there is no PDCCH in the NCT cell, the base station corresponding to the LCT cell sends the MCCH information change notification of the NCT cell, so that support of the NCT cell for an MBMS service counting procedure can be achieved.

According to the method for service counting in a new carrier type cell provided in this embodiment, UE receives an MCCH information change notification of the NCT cell sent by a base station corresponding to an LCT cell, then receives, according to the MCCH information change notification of the NCT cell, counting request information of the NCT cell sent by the base station corresponding to the LCT cell or a base station corresponding to the NCT cell, and sends counting feedback information to the base station corresponding to the LCT cell or the base station corresponding to the NCT cell, so that support of the NCT cell for an MBMS service counting procedure can be achieved and an application scenario of an MBMS is extended.

FIG. 8 is a flowchart of Embodiment 2 of a method for service counting in a new carrier type cell according to the present invention. As shown in FIG. 8, the method for service counting in a new carrier type cell in this embodiment includes:
S801. A base station corresponding to an LCT cell sends an MCCH information change notification of an NCT cell to UE.
S802. The base station corresponding to the LCT cell sends counting request information of the NCT cell to the UE.

Further, before S801, the method may further include: receiving, by the base station corresponding to the LCT cell, MBMS counting request information of the NCT cell sent by an MCE.

Optionally, the MBMS counting request information of the NCT cell may include:
temporary mobile group identity (Temporary Mobile Group Identity) TMGI information;
identity information of the NCT cell or identity information of an NCT carrier frequency; and
identity information of a multimedia broadcast multicast service single frequency network MBSFN area.

The TMGI information is used to indicate an MBMS service that needs to be reported.

Because the MCCH information change notification of the NCT cell is sent by the base station corresponding to the LCT cell, the MBMS counting request information sent by the MCE to the base station corresponding to the LCT cell needs to include:
the identity information of the NCT cell or the identity information of the NCT carrier frequency; and
the identity information of the multimedia broadcast multicast service single frequency network MBSFN area.

According to the method for service counting in a new carrier type cell provided in this embodiment, a base station corresponding to an LCT cell sends an MCCH information change notification of the NCT cell to UE, and the base station corresponding to the LCT cell sends counting request information of the NCT cell to the UE, so that support of the NCT cell for an MBMS service counting procedure can be achieved and an application scenario of an MBMS is extended.

The following describes different implementation manners of the technical solutions of the present invention by using interaction processes between UE, a base station corresponding to an LCT cell, a base station corresponding to an NCT cell, and an MCE.

It should be noted that the following embodiments are described by using an example in which an LCT cell and an NCT cell belong to different base stations. For a scenario in which an LCT cell and an NCT cell belong to a same base station, in different embodiments, information or data is sent by the same base station to UE by using different cells, that is, sent by using the LCT cell or the NCT cell. Information sent by an MCE to the same base station may include information about the LCT cell and information about the NCT cell, and an implementation principle thereof is the same with that of a scenario in which an LCT cell and an NCT cell belong to different base stations. Therefore, details are not described again.

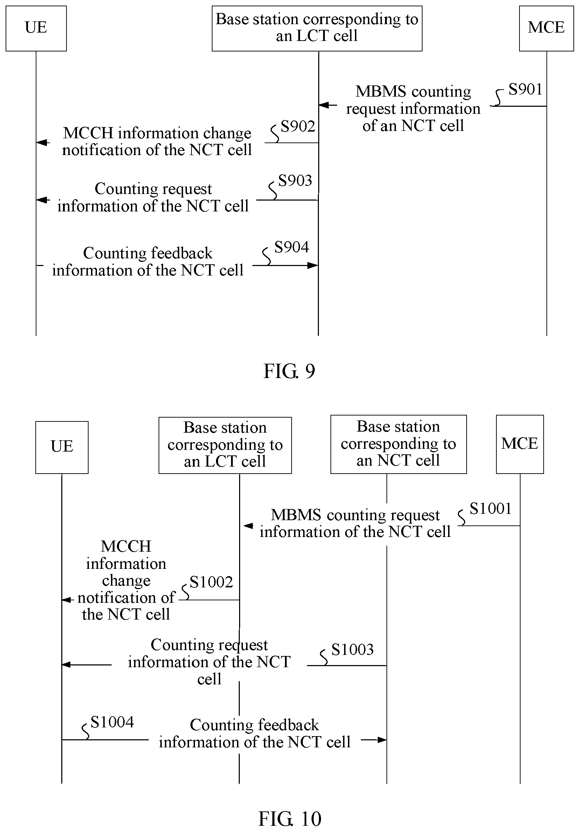

FIG. 9 is a flowchart of Embodiment 3 of a method for service counting in a new carrier type cell according to the present invention. As shown in FIG. 9, the method for service counting in a new carrier type cell in this embodiment includes:
S901. An MCE sends MBMS counting request information of an NCT cell to a base station corresponding to an LCT cell.

The MBMS counting request information in this embodiment includes: TMGI information;
identity information of the NCT cell or identity information of an NCT carrier frequency; and
identity information of a multimedia broadcast multicast service single frequency network MBSFN area.

S902. The base station corresponding to the LCT cell sends an MCCH information change notification of the NCT cell to UE.

S903. The base station corresponding to the LCT cell sends the counting request information of the NCT cell to the UE.

S904. The UE sends counting feedback information of the NCT cell to the base station corresponding to the LCT cell.

Specifically, if the UE supports receiving of an MBMS service in the NCT cell, the UE may send the counting feedback information to the base station corresponding to the LCT cell or a base station corresponding to the NCT cell, so that the base station corresponding to the LCT cell or the base station corresponding to the NCT cell collects statistics about a feedback of the UE and reports the feedback to the MCE.

It may be understood that if the UE does not support receiving of an MBMS service in the NCT cell, the UE may do not perform S904.

According to the method for service counting in a new carrier type cell provided in this embodiment, UE receives an MCCH information change notification of the NCT cell sent by a base station corresponding to an LCT cell, then receives, according to the MCCH information change notification of the NCT cell, counting request information of the NCT cell sent by the base station corresponding to the LCT cell or a base station corresponding to the NCT cell, and sends counting feedback information to the base station corresponding to the LCT cell or the base station corresponding to the NCT cell, so that support of the NCT cell for an MBMS service counting procedure can be achieved and an application scenario of an MBMS is extended.

FIG. 10 is a flowchart of Embodiment 4 of a method for service counting in a new carrier type cell according to the present invention. As shown in FIG. 10, the method for service counting in a new carrier type cell in this embodiment includes:
S1001. An MCE sends MBMS counting request information of an NCT cell to a base station corresponding to an LCT cell.

The MBMS counting request information in this embodiment includes TMGI information.

In this embodiment, because the counting request information of the NCT cell is sent by a base station corresponding to the NCT cell to UE, the MBMS counting request information of the NCT cell may do not include:
identity information of the NCT cell or identity information of an NCT carrier frequency; or
identity information of a multimedia broadcast multicast service single frequency network MBSFN area.

S1002. The base station corresponding to the LCT cell sends an MCCH information change notification of the NCT cell to UE.

S1003. A base station corresponding to the NCT cell sends the counting request information of the NCT cell to the UE.

S1004. The UE sends counting feedback information of the NCT cell to the base station corresponding to the NCT cell.

According to the method for service counting in a new carrier type cell provided in this embodiment, a base station corresponding to an LCT cell sends an MCCH information change notification of the NCT cell to UE, and the base station corresponding to the LCT cell sends counting request information of the NCT cell to the UE, so that support of the NCT cell for an MBMS service counting procedure can be achieved and an application scenario of an MBMS is extended.

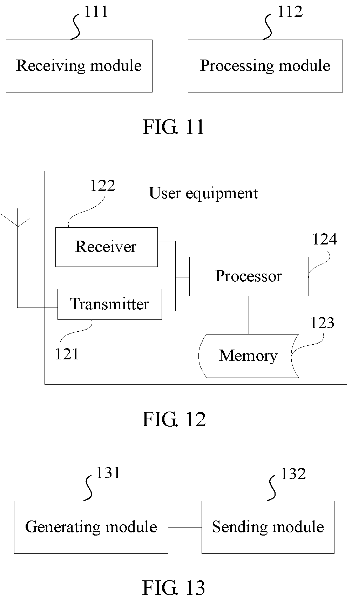

FIG. 11 is a flowchart of Embodiment 1 of user equipment according to the present invention. As shown in FIG. 11, the user equipment in this embodiment includes: a receiving module 111 and a processing module 112. The receiving module 111 is configured to receive a system message sent by a base station corresponding to an LCT cell, where the system message includes information about an NCT frequency and MBMS SAI information corresponding to the information about the NCT frequency, and the processing module 112 is configured to perform, according to the system message, indication processing on an MBMS service that is being received or of interest.

Optionally, the system message further includes at least one type of the following information:
identity information of an NCT cell;
an LCT frequency that provides assistance for the NCT cell or the NCT frequency in supporting the MBMS service; and
identity information of an LCT cell that provides assistance for the NCT cell or the NCT frequency in supporting the MBMS service.

Optionally, resources of the NCT frequency are all used to support the MBMS and the system message further includes resource indication information or resource configuration information.

Optionally, the resource indication information includes at least one type of the following information:
an indication of supporting multiple-input multiple-output;
an indication of supporting a reference signal; and
an indication of supporting a transfer mode; and
the resource configuration information includes at least one type of the following information:
   a configuration of multiple-input multiple-output;
   a configuration of a reference signal; and
   a configuration of a transfer mode.

Further, a frequency corresponding to the MBMS service that is being received or of interest is an NCT frequency; and
the processing module 112 is specifically configured to:
set, according to the system message, the NCT frequency to a highest priority for cell selection or reselection performed by the UE; or
set, according to the system message, the LCT frequency to a highest priority for cell selection or reselection performed by the UE, where the LCT frequency provides assistance for the NCT frequency in supporting the MBMS service; or
set, according to the system message, the NCT frequency and the LCT frequency to a highest priority for cell selection or reselection performed by the UE, where the LCT frequency provides assistance for the NCT frequency in supporting the MBMS service.

Further, a frequency corresponding to the MBMS service that is being received or of interest is an NCT frequency; and
the processing module 112 is specifically configured to:
send, according to the system message, MBMS indication information to the base station corresponding to the LCT cell, where the MBMS indication information includes the NCT frequency.

The apparatus in this embodiment may be configured to implement the technical solutions in the method embodiments shown in FIG. 1, FIG. 2 and FIG. 3, and implementation principles and technical effects of the apparatus are similar to those of the method embodiments shown in FIG. 1, FIG. 2 and FIG. 3. Details are not described herein again.

FIG. 12 is a schematic structural diagram of Embodiment 2 of user equipment according to the present invention. As shown in FIG. 12, the user equipment in this embodiment includes a transmitter 121, a receiver 122, a memory 123, and a processor 124 that is separately connected to the transmitter 121, the receiver 122, and the memory 123. Certainly, the user equipment in this embodiment may further include general components, such as an antenna, a baseband processing component, a medium radio frequency processing component, and an input and output apparatus, and this embodiment of the present invention imposes no limitation on this.

A set of program code is stored in the memory 123, and the processor 124 is configured to invoke the program code stored in the memory 123 to execute the following operations:
receiving a system message sent by a base station corresponding to an LCT cell, where the system message includes information about an NCT frequency and MBMS SAI information corresponding to the information about the NCT frequency; and
performing, according to the system message, indication processing on an MBMS service that is being received or of interest.

FIG. 13 is a schematic structural diagram of Embodiment 1 of a base station corresponding to a legacy carrier type according to the present invention. As shown in FIG. 13, the base station corresponding to the legacy carrier type in this embodiment includes: a generating module 131 and a sending module 132. The generating module 131 is configured to generate a system message, where the system message includes information about an NCT frequency and MBMS SAI information corresponding to the information about the NCT frequency. The sending module 132 is configured to send the system message to UE, so that the UE performs, according to the system message, indication processing on an MBMS service that is being received or of interest.

Optionally, the system message further includes at least one type of the following information:
identity information of an NCT cell;
an LCT frequency that provides assistance for the NCT cell or the NCT frequency in supporting the MBMS service; and
identity information of an LCT cell that provides assistance for the NCT cell or the NCT frequency in supporting the MBMS service.

Optionally, resources of the NCT frequency are all used to support the MBMS and the system message further includes resource indication information or resource configuration information.

Optionally, the resource indication information includes at least one type of the following information:
an indication of supporting multiple-input multiple-output;
an indication of supporting a reference signal; and
an indication of supporting a transfer mode; and
the resource configuration information includes at least one type of the following information:
   a configuration of multiple-input multiple-output;
   a configuration of a reference signal; and
   a configuration of a transfer mode.

Further, a frequency corresponding to the MBMS service that is being received or of interest is an NCT frequency; and
the sending module 132 is specifically configured to:
send the system message to the UE, so that the UE in idle state sets, according to the system message, the NCT frequency to a highest priority for cell selection or reselection performed by the UE; or
send the system message to the UE, so that the UE in idle state sets, according to the system message, the LCT frequency to a highest priority for cell selection or reselection performed by the UE, where the LCT frequency provides assistance for the NCT frequency in supporting the MBMS service; or
send the system message to the UE, so that the UE in idle state sets, according to the system message, the NCT frequency and the LCT frequency to a highest priority for cell selection or reselection performed by the UE, where the LCT frequency provides assistance for the NCT frequency in supporting the MBMS service.

Further, a frequency corresponding to the MBMS service that is being received or of interest is an NCT frequency; and
the sending module 132 is specifically configured to:
send the system message to the UE, so that the UE in connected state sends, according to the system message, MBMS indication information to the base station corresponding to the LCT cell, where the MBMS indication information includes the NCT frequency.

The apparatus in this embodiment may be configured to implement the technical solutions in the method embodiments shown in FIG. 4, FIG. 5 and FIG. 6, and implementation principles and technical effects of the apparatus are similar to those of the method embodiments shown in FIG. 1, FIG. 2 and FIG. 3. Details are not described herein again.

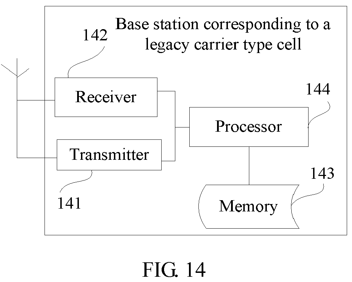

FIG. 14 is a schematic structural diagram of Embodiment 2 of a base station corresponding to a legacy carrier type cell according to the present invention. As shown in FIG. 14, the base station corresponding to the legacy carrier type cell in this embodiment includes a transmitter 141, a receiver 142, a memory 143, and a processor 144 that is separately connected to the transmitter 141, the receiver 142, and the memory 143. Certainly, the base station corresponding to the legacy carrier type cell in this embodiment may further include general components, such as an antenna, a baseband processing component, a medium radio frequency processing component, and an input and output apparatus, and this embodiment of the present invention imposes no limitation on this.

A set of program code is stored in the memory 143, and the processor 144 is configured to invoke the program code stored in the memory 143 to execute the following operations:
generating a system message, where the system message includes information about an NCT frequency and MBMS SAI information corresponding to the information about the NCT frequency; and
sending the system message to UE, so that the UE performs, according to the system message, indication processing on an MBMS service that is being received or of interest.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor (processor) to perform some of the steps of the methods described in the embodiments of the present invention. The foregoing storage medium includes: any medium that can store program code, such as an USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, refer to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A service indication processing method, comprising:
receiving (S101), by user equipment, UE, a system message sent by a base station corresponding to a legacy carrier type, LCT cell, wherein the system message comprises information about a new carrier type, NCT frequency and information about a service area identity of a multimedia broadcast multicast service, MBMS SAI corresponding to the NCT frequency; and
performing (S102), by the UE, indication processing on an MBMS service that is being received or of interest, wherein said indication processing comprises at least one of, in an idle state of the UE, a cell selection or reselection based on the information comprised in the system message and, in a connected state of the UE, sending, by the UE, MBMS indication information to the base station corresponding to the LCT cell for cell handover, wherein said MBMS indication information is based on the information comprised in the system message;
wherein resources of the NCT frequency are all used to support the MBMS, and wherein the NCT frequency is not configured to work independently and the NCT frequency requires assistance of the LCT cell in supporting the MBMS service.

2. The method according to claim 1, wherein the system message further comprises at least one type of the following information:
identity information of an NCT cell;
an LCT frequency that provides assistance for the NCT cell or the NCT frequency in supporting the MBMS service; and
identity information of an LCT cell that provides assistance for the NCT cell or the NCT frequency in supporting the MBMS service.

3. The method according to claim 1 or 2, wherein the system message further comprises resource indication information or resource configuration information.

4. The method according to claim 3, wherein the resource indication information comprises at least one type of the following information:
an indication of supporting multiple-input multiple-output;
an indication of supporting a reference signal; and
an indication of supporting a transfer mode; and
the resource configuration information comprises at least one type of the following information:
a configuration of multiple-input multiple-output;
a configuration of a reference signal; and
a configuration of a transfer mode.

5. The method according to any one of claims 1 to 4, wherein a frequency corresponding to the MBMS service that is being received or of interest is an NCT frequency; and
the performing (S102), by the UE according to the system message, indication processing on an MBMS service that is being received or of interest comprises:
setting (S202), by the UE in idle state according to the system message, the NCT frequency to a highest priority for cell selection or reselection performed by the UE; or
setting (S202), by the UE in idle state according to the system message, the LCT frequency to a highest priority for cell selection or reselection performed by the UE, wherein the LCT frequency provides assistance for the NCT frequency in supporting the MBMS service; or
setting (S202), by the UE in idle state according to the system message, the NCT frequency and the LCT frequency to a highest priority for cell selection or reselection performed by the UE, wherein the LCT frequency provides assistance for the NCT frequency in supporting the MBMS service.

6. The method according to any one of claims 1 to 4, wherein a frequency corresponding to the MBMS service that is being received or of interest is an NCT frequency; and
the performing (S102), by the UE according to the system message, indication processing on an MBMS service that is being received or of interest comprises:
sending (S302), by the UE in connected state according to the system message, MBMS indication information to the base station corresponding to the LCT cell, wherein the MBMS indication information comprises the NCT frequency.

7. A service indication processing method, comprising:
generating (S401), by a base station corresponding to a legacy carrier type, LCT cell, a system message, wherein the system message comprises information about a new carrier type, NCT frequency and information about a service area identity of a multimedia broadcast multicast service, MBMS SAI corresponding to the information about the NCT frequency; and
sending (S402), by the base station corresponding to the LCT cell, the system message to user equipment, UE, so that the UE performs, indication processing on an MBMS service that is being received or of interest, , indication processing on an MBMS service that is being received or of interest, wherein said indication processing comprises at least one of, in an idle state of the UE, a cell selection or reselection based on the information comprised in the system message and, in a connected state of the UE, sending, by the UE, MBMS indication information to the base station corresponding to the LCT cell for cell handover, wherein said MBMS indication information is based on the information comprised in the system message;
wherein resources of the NCT frequency are all used to support the MBMS, and wherein the NCT frequency is not configured to work independently and the NCT frequency requires assistance of the LCT cell in supporting the MBMS service.

8. The method according to claim 7, wherein the system message further comprises at least one type of the following information:
identity information of an NCT cell;
an LCT frequency that provides assistance for the NCT cell or the NCT frequency in supporting the MBMS service; and
identity information of an LCT cell that provides assistance for the NCT cell or the NCT frequency in supporting the MBMS service.

9. The method according to claim 7 or 8, wherein the system message further comprises resource indication information or resource configuration information.

10. The method according to claim 9, wherein the resource indication information comprises at least one type of the following information:
an indication of supporting multiple-input multiple-output;
an indication of supporting a reference signal; and
an indication of supporting a transfer mode; and
the resource configuration information comprises at least one type of the following information:
a configuration of multiple-input multiple-output;
a configuration of a reference signal; and
a configuration of a transfer mode.

11. The method according to any one of claims 7 to 10, wherein a frequency corresponding to the MBMS service that is being received or of interest is an NCT frequency; and
the sending (S402), by the base station corresponding to the LCT cell, the system message to user equipment UE, so that the UE performs, according to the system message, indication processing on an MBMS service that is being received or of interest comprises:
sending (S502), by the base station corresponding to the LCT cell, the system message to the user equipment UE, so that the UE in idle state sets, according to the system message, the NCT frequency to a highest priority for cell selection or reselection performed by the UE; or
sending (S502), by the base station corresponding to the LCT cell, the system message to the user equipment UE, so that the UE in idle state sets, according to the system message, the LCT frequency to a highest priority for cell selection or reselection performed by the UE, wherein the LCT frequency provides assistance for the NCT frequency in supporting the MBMS service; or
sending (S502), by the base station corresponding to the LCT cell, the system message to the user equipment UE, so that the UE in idle state sets, according to the system message, the NCT frequency and the LCT frequency to a highest priority for cell selection or reselection performed by the UE, wherein the LCT frequency provides assistance for the NCT frequency in supporting the MBMS service.

12. The method according to any one of claims 7 to 10, wherein a frequency corresponding to the MBMS service that is being received or of interest is an NCT frequency; and
the sending (S402), by the base station corresponding to the LCT cell, the system message to user equipment UE, so that the UE performs, according to the system message, indication processing on an MBMS service that is being received or of interest comprises:
sending (S602), by the base station corresponding to the LCT cell, the system message to the user equipment UE, so that the UE in connected state sends, according to the system message, MBMS indication information to the base station corresponding to the LCT cell, wherein the MBMS indication information comprises the NCT frequency.

13. User equipment, comprising:
a receiving module (111), configured to receive a system message sent by a base station corresponding to a legacy carrier type, LCT cell, wherein the system message comprises information about a new carrier type, NCT frequency and information about a service area identity of a multimedia broadcast multicast service, MBMS SAI corresponding to the NCT frequency; and
a processing module (112), configured to perform, indication processing on an MBMS service that is being received or of interest, indication processing on an MBMS service that is being received or of interest, wherein said indication processing comprises at least one of, in an idle state of the UE, a cell selection or reselection based on the information comprised in the system message and, in a connected state of the UE, sending, by the UE, MBMS indication information to the base station corresponding to the LCT cell for cell handover, wherein said MBMS indication information is based on the information comprised in the system message;
wherein resources of the NCT frequency are all used to support the MBMS, and wherein the NCT frequency is not configured to work independently and the NCT frequency requires assistance of the LCT cell in supporting the MBMS service.

14. The user equipment according to claim 13, wherein the system message further comprises at least one type of the following information:
identity information of an NCT cell;
an LCT frequency that provides assistance for the NCT cell or the NCT frequency in supporting the MBMS service; and
identity information of an LCT cell that provides assistance for the NCT cell or the NCT frequency in supporting the MBMS service.

15. The user equipment according to claim 13 or 14, wherein the system message further comprises resource indication information or resource configuration information.

16. The user equipment according to claim 15, wherein the resource indication information comprises at least one type of the following information:
an indication of supporting multiple-input multiple-output;
an indication of supporting a reference signal; and
an indication of supporting a transfer mode; and
the resource configuration information comprises at least one type of the following information:
a configuration of multiple-input multiple-output;
a configuration of a reference signal; and
a configuration of a transfer mode.

17. The user equipment according to any one of claims 13 to 16, wherein a frequency corresponding to the MBMS service that is being received or of interest is an NCT frequency; and
the processing module (111) is specifically configured to:
set, according to the system message, the NCT frequency to a highest priority for cell selection or reselection performed by the UE; or
set, according to the system message, the LCT frequency to a highest priority for cell selection or reselection performed by the UE, wherein the LCT frequency provides assistance for the NCT frequency in supporting the MBMS service; or
set, according to the system message, the NCT frequency and the LCT frequency to a highest priority for cell selection or reselection performed by the UE, wherein the LCT frequency provides assistance for the NCT frequency in supporting the MBMS service.

18. The user equipment according to any one of claims 13 to 16, wherein a frequency corresponding to the MBMS service that is being received or of interest is an NCT frequency; and
the processing module (111) is specifically configured to:
send, according to the system message, MBMS indication information to the base station corresponding to the LCT cell, wherein the MBMS indication information comprises the NCT frequency.

19. A base station corresponding to a legacy carrier type, comprising:
a generating module (131), configured to generate a system message, wherein the system message comprises information about a new carrier type, NCT frequency and information about a service area identity of a multimedia broadcast multicast service, MBMS SAI corresponding to the information about the NCT frequency; and
a sending module (132), configured to send the system message to user equipment UE, so that the UE performs, indication processing on an MBMS service that is being received or of interest, wherein said indication processing comprises at least one of, in an idle state of the UE, a cell selection or reselection based on the information comprised in the system message and, in a connected state of the UE, sending, by the UE, MBMS indication information to the base station corresponding to the LCT cell for cell handover, wherein the MBMS indication information comprises the NCT frequency corresponding to the MBMS service that is being received or of interest, wherein said MBMS indication information is based on the information comprised in the system message;
wherein resources of the NCT frequency are all used to support the MBMS, and wherein the NCT frequency is not configured to work independently and the NCT frequency requires assistance of the LCT cell in supporting the MBMS service.

20. The base station corresponding to a legacy carrier type according to claim 19, wherein the system message further comprises at least one type of the following information:
identity information of an NCT cell;
an LCT frequency that provides assistance for the NCT cell or the NCT frequency in supporting the MBMS service; and
identity information of an LCT cell that provides assistance for the NCT cell or the NCT frequency in supporting the MBMS service.

21. The base station corresponding to a legacy carrier type according to claim 19 or 20, wherein the system message further comprises resource indication information or resource configuration information.

22. The base station corresponding to a legacy carrier type according to claim 21, wherein the resource indication information comprises at least one type of the following information:
an indication of supporting multiple-input multiple-output;
an indication of supporting a reference signal; and
an indication of supporting a transfer mode; and
the resource configuration information comprises at least one type of the following information:
a configuration of multiple-input multiple-output;
a configuration of a reference signal; and
a configuration of a transfer mode.

23. The base station corresponding to a legacy carrier type according to any one of claims 19 to 22, wherein a frequency corresponding to the MBMS service that is being received or of interest is an NCT frequency; and
the sending module (132) is specifically configured to:
send the system message to the user equipment, UE, so that the UE in idle state sets, according to the system message, the NCT frequency to a highest priority for cell selection or reselection performed by the UE; or
send the system message to the user equipment UE, so that the UE in idle state sets, according to the system message, the LCT frequency to a highest priority for cell selection or reselection performed by the UE, wherein the LCT frequency provides assistance for the NCT frequency in supporting the MBMS service; or
send the system message to the user equipment UE, so that the UE in idle state sets, according to the system message, the NCT frequency and the LCT frequency to a highest priority for cell selection or reselection performed by the UE, wherein the LCT frequency provides assistance for the NCT frequency in supporting the MBMS service.

24. The base station corresponding to a legacy carrier type according to any one of claims 19 to 22, wherein a frequency corresponding to the MBMS service that is being received or of interest is an NCT frequency; and
the sending module (132) is specifically configured to:
send the system message to the user equipment UE, so that the UE in connected state sends, according to the system message, MBMS indication information to the base station corresponding to the LCT cell, wherein the MBMS indication information comprises the NCT frequency.

## Patentansprüche

1. Dienstanzeigeverarbeitungsverfahren, aufweisend:
Empfangen (S101), durch ein Benutzergerät, UE, einer Systemnachricht, die von einer Basisstation gesendet wird, die einer Zelle eines älteren Trägertyps, LCT-Zelle, entspricht, wobei die Systemnachricht Informationen über eine Frequenz eines neuen Trägertyps, NCT-Frequenz, und Informationen über eine Dienstbereichsidentität eines Multimedia-Broadcast-Multicast-Dienstes, MBMS SAI, die der NCT-Frequenz entsprechen, aufweist; und
Durchführen (S102), durch das UE, einer Anzeigeverarbeitung an einem MBMS-Dienst, der empfangen wird oder von Interesse ist, wobei die Anzeigeverarbeitung mindestens eines von, in einem Ruhezustand des UE, einer Zellenauswahl oder Wiederauswahl auf der Basis der Informationen, die in der Systemnachricht enthalten sind, und, in einem verbundenen Zustand des UE, Senden, durch das UE, von MBMS-Anzeigeinformationen an die Basisstation, die der LCT-Zelle für die Zellenverbindungsübergabe entspricht, aufweist, wobei die MBMS-Anzeigeinformationen auf den Informationen basieren, die in der Systemnachricht enthalten sind;
wobei Ressourcen der NCT-Frequenz alle verwendet werden, um den MBMS zu unterstützen, und wobei die NCT-Frequenz nicht konfiguriert ist, um unabhängig zu arbeiten, und die NCT-Frequenz eine Unterstützung der LCT-Zelle bei der Unterstützung des MBMS-Dienstes erfordert.

2. Verfahren nach Anspruch 1, wobei die Systemnachricht ferner mindestens einen Typ der folgenden Informationen aufweist:
Identitätsinformationen einer NCT-Zelle;
eine LCT-Frequenz, die Unterstützung für die NCT-Zelle oder die NCT-Frequenz bei der Unterstützung des MBMS-Dienstes bereitstellt; und
Identitätsinformationen einer LCT-Zelle, die Unterstützung für die NCT-Zelle oder die NCT-Frequenz bei der Unterstützung des MBMS-Dienstes bereitstellt.

3. Verfahren nach Anspruch 1 oder 2, wobei die Systemnachricht ferner Ressourcenanzeigeinformationen oder Ressourcenkonfigurationsinformationen aufweist.

4. Verfahren nach Anspruch 3, wobei die Ressourcenanzeigeinformationen mindestens einen Typ der folgenden Informationen aufweisen:
eine Anzeige einer Unterstützung von Mehrfacheingabe-Mehrfachausgabe; eine Anzeige einer Unterstützung eines Referenzsignals; und
eine Anzeige einer Unterstützung eines Übertragungsmodus; und
wobei die Ressourcenkonfigurationsinformationen mindestens einen Typ der folgenden Informationen aufweisen:
eine Konfiguration von Mehrfacheingabe-Mehrfachausgabe;
eine Konfiguration eines Referenzsignals; und
eine Konfiguration eines Übertragungsmodus.

5. Verfahren nach einem der Ansprüche 1 bis 4, wobei eine Frequenz, die dem MBMS-Dienst entspricht, der empfangen wird oder von Interesse ist, eine NCT-Frequenz ist; und
das Durchführen (S102), durch das UE, gemäß der Systemnachricht, der Anzeigeverarbeitung auf einem MBMS-Dienst, der empfangen wird oder von Interesse ist, aufweist:
Einstellen (S202), durch das UE im Ruhezustand gemäß der Systemnachricht, der NCT-Frequenz auf eine höchste Priorität für die Zellenauswahl oder Wiederauswahl, die von dem UE durchgeführt wird;
oder
Einstellen (S202), durch das UE im Ruhezustand gemäß der Systemnachricht, der LCT-Frequenz auf eine höchste Priorität für die Zellenauswahl oder Wiederauswahl, die von dem UE durchgeführt wird, wobei die LCT-Frequenz Unterstützung für die NCT-Frequenz bei der Unterstützung des MBMS-Dienstes bereitstellt; oder
Einstellen (S202), durch das UE im Ruhezustand gemäß der Systemnachricht, der NCT-Frequenz und der LCT-Frequenz auf eine höchste Priorität für die Zellenauswahl oder Wiederauswahl, die von dem UE durchgeführt wird, wobei die LCT-Frequenz Unterstützung für die NCT-Frequenz bei der Unterstützung des MBMS-Dienstes bereitstellt.

6. Verfahren nach einem der Ansprüche 1 bis 4, wobei eine Frequenz, die dem MBMS-Dienst entspricht, der empfangen wird oder von Interesse ist, eine NCT-Frequenz ist; und
das Durchführen (S102), durch das UE gemäß der Systemnachricht, der Anzeigeverarbeitung auf einem MBMS-Dienst, der empfangen oder von Interesse ist, aufweist:
Senden (S302), durch das UE in dem verbundenen Zustand gemäß der Systemnachricht, von MBMS-Anzeigeinformationen an die Basisstation, die der LCT-Zelle entspricht, wobei die MBMS-Anzeigeinformationen die NCT-Frequenz aufweisen.

7. Dienstanzeigeverarbeitungsverfahren, aufweisend:
Erzeugen (S401), durch eine Basisstation, die einer Zelle eines älteren Trägertyps, LCT-Zelle, entspricht, einer Systemnachricht, wobei die Systemnachricht Informationen über eine Frequenz eines neuen Trägertyps, NCT-Frequenz, und Informationen über eine Dienstbereichsidentität eines Multimedia-Broadcast-Multicast-Dienstes, MBMS SAI, die den Informationen über die NCT-Frequenz entsprechen, aufweist; und
Senden (S402), durch die Basisstation, die der LCT-Zelle entspricht, der Systemnachricht an das Benutzergerät, UE, so dass das UE eine Anzeigeverarbeitung auf einem MBMS-Dienst, der empfangen wird oder von Interesse ist, eine Anzeigeverarbeitung auf einem MBMS-Dienst, der empfangen wird oder von Interesse ist, durchführt, wobei die Anzeigeverarbeitung mindestens eines von, in einem Ruhezustand des UE, einer Zellenauswahl oder Wiederauswahl auf der Basis der Informationen, die in der Systemnachricht enthalten sind, und, in einem verbundenen Zustand des UE, Senden, durch das UE, von MBMS-Anzeigeinformationen an die Basisstation, die der LCT-Zelle für die Zellenverbindungsübergabe entspricht, aufweist, wobei die MBMS-Anzeigeinformationen auf den Informationen basieren, die in der Systemnachricht enthalten sind;
wobei Ressourcen der NCT-Frequenz alle verwendet werden, um den MBMS zu unterstützen, und wobei die NCT-Frequenz nicht konfiguriert ist, um unabhängig zu arbeiten, und die NCT-Frequenz eine Unterstützung der LCT-Zelle bei der Unterstützung des MBMS-Dienstes erfordert.

8. Verfahren nach Anspruch 7, wobei die Systemnachricht ferner mindestens einen Typ der folgenden Informationen aufweist:
Identitätsinformationen einer NCT-Zelle;
eine LCT-Frequenz, die Unterstützung für die NCT-Zelle oder die NCT-Frequenz bei der Unterstützung des MBMS-Dienstes bereitstellt; und
Identitätsinformationen einer LCT-Zelle, die Unterstützung für die NCT-Zelle oder die NCT-Frequenz bei der Unterstützung des MBMS-Dienstes bereitstellt.

9. Verfahren nach Anspruch 7 oder 8, wobei die Systemnachricht ferner Ressourcenanzeigeinformationen oder Ressourcenkonfigurationsinformationen aufweist.

10. Verfahren nach Anspruch 9, wobei die Ressourcenanzeigeinformationen mindestens einen Typ der folgenden Informationen aufweisen:
eine Anzeige einer Unterstützung von Mehrfacheingabe-Mehrfachausgabe;
eine Anzeige einer Unterstützung eines Referenzsignals; und
eine Anzeige einer Unterstützung eines Übertragungsmodus; und
wobei die Ressourcenkonfigurationsinformationen mindestens einen Typ der folgenden Informationen aufweisen:
eine Konfiguration von Mehrfacheingabe-Mehrfachausgabe;
eine Konfiguration eines Referenzsignals; und
eine Konfiguration eines Übertragungsmodus.

11. Verfahren nach einem der Ansprüche 7 bis 10, wobei eine Frequenz, die dem MBMS-Dienst entspricht, der empfangen wird oder von Interesse ist, eine NCT-Frequenz ist; und
das Senden (S402), durch die Basisstation, die der LCT-Zelle entspricht, der Systemnachricht an das Benutzergerät, UE, so dass das UE gemäß der Systemnachricht die Anzeigeverarbeitung auf einem MBMS-Dienst, der empfangen wird oder von Interesse ist, durchführt, aufweist:
Senden (S502), durch die Basisstation, die der LCT-Zelle entspricht, der Systemnachricht an das Benutzergerät, UE, so dass das UE im Ruhezustand gemäß der Systemnachricht die NCT-Frequenz auf eine höchste Priorität für die Zellenauswahl oder Wiederauswahl, die durch das UE durchgeführt wird, einstellt;
oder
Senden (S502), durch die Basisstation, die der LCT-Zelle entspricht, der Systemnachricht an das Benutzergerät, UE, so dass das UE im Ruhezustand gemäß der Systemnachricht die LCT-Frequenz auf eine höchste Priorität für die Zellenauswahl oder Wiederauswahl, die durch das UE durchgeführt wird, einstellt, wobei die LCT-Frequenz Unterstützung für die NCT-Frequenz bei der Unterstützung des MBMS-Dienstes bereitstellt; oder
Senden (S502), durch die Basisstation, die der LCT-Zelle entspricht, der Systemnachricht an das Benutzergerät, UE, so dass das UE im Ruhezustand gemäß der Systemnachricht die NCT-Frequenz und die LCT-Frequenz auf eine höchste Priorität zur Zellenauswahl oder Wiederauswahl, die durch das UE durchgeführt wird, einstellt, wobei die LCT-Frequenz Unterstützung für die NCT-Frequenz bei der Unterstützung des MBMS-Dienstes bereitstellt.

12. Verfahren nach einem der Ansprüche 7 bis 10, wobei eine Frequenz, die dem MBMS-Dienst entspricht, der empfangen wird oder von Interesse ist, eine NCT-Frequenz ist; und
das Senden (S402), durch die Basisstation, die der LCT-Zelle entspricht, der Systemnachricht an das Benutzergerät, UE, so dass das UE gemäß der Systemnachricht die Anzeigeverarbeitung auf einem MBMS-Dienst, der empfangen wird oder von Interesse ist, durchführt, aufweist:
Senden (S602), durch die Basisstation, die der LCT-Zelle entspricht, der Systemnachricht an das Benutzergerät, UE, so dass das UE im verbundenen Zustand gemäß der Systemnachricht MBMS-Anzeigeinformationen an die Basisstation, die der LCT-Zelle entspricht, sendet, wobei die MBMS-Anzeigeinformationen die NCT-Frequenz aufweisen.

13. Benutzergerät, aufweisend:
ein Empfangsmodul (111), das konfiguriert ist, um eine Systemnachricht zu empfangen, die von einer Basisstation gesendet wird, die einer Zelle eines älteren Trägerstyps, LCT-Zelle, entspricht, wobei die Systemnachricht Informationen über eine Frequenz eines neuen Trägertyps, NCT-Frequenz, und Informationen über eine Dienstbereichsidentität eines Multimedia-Broadcast-Multicast-Dienstes, MBMS SAI, die der NCT-Frequenz entsprechen, aufweist; und
ein Verarbeitungsmodul (112), das konfiguriert ist, um eine Anzeigeverarbeitung auf einem MBMS-Dienst, der empfangen wird oder von Interesse ist, eine Anzeigeverarbeitung auf einem MBMS-Dienst, der empfangen wird oder von Interesse ist, durchzuführen, wobei die Anzeigeverarbeitung mindestens eines von, in einem Ruhezustand des UE, einer Zellenauswahl oder Wiederauswahl auf der Basis der Informationen, die in der Systemnachricht enthalten sind, und, in einem verbundenen Zustand des UE, Senden, durch das UE, von MBMS-Anzeigeinformationen an die Basisstation, die der LCT-Zelle für die Zellenverbindungsübergabe entspricht, aufweist, wobei die MBMS-Anzeigeinformationen auf den Informationen basieren, die in der Systemnachricht enthalten sind;
wobei Ressourcen der NCT-Frequenz alle verwendet werden, um den MBMS zu unterstützen, und wobei die NCT-Frequenz nicht konfiguriert ist, um unabhängig zu arbeiten, und die NCT-Frequenz eine Unterstützung der LCT-Zelle bei der Unterstützung des MBMS-Dienstes erfordert.

14. Benutzergerät nach Anspruch 13, wobei die Systemnachricht ferner mindestens einen Typ der folgenden Informationen aufweist:
Identitätsinformationen einer NCT-Zelle;
eine LCT-Frequenz, die Unterstützung für die NCT-Zelle oder die NCT-Frequenz bei der Unterstützung des MBMS-Dienstes bereitstellt; und
Identitätsinformationen einer LCT-Zelle, die Unterstützung für die NCT-Zelle oder die NCT-Frequenz bei der Unterstützung des MBMS-Dienstes bereitstellt.

15. Benutzergerät nach Anspruch 13 oder 14, wobei die Systemnachricht ferner Ressourcenanzeigeinformationen oder Ressourcenkonfigurationsinformationen aufweist.

16. Benutzergerät nach Anspruch 15, wobei die Ressourcenanzeigeinformationen mindestens einen Typ der folgenden Informationen aufweisen:
eine Anzeige einer Unterstützung von Mehrfacheingabe-Mehrfachausgabe;
eine Anzeige einer Unterstützung eines Referenzsignals; und
eine Anzeige einer Unterstützung eines Übertragungsmodus; und
die Ressourcenkonfigurationsinformationen mindestens einen Typ der folgenden Informationen aufweisen:
eine Konfiguration von Mehrfacheingabe-Mehrfachausgabe;
eine Konfiguration eines Referenzsignals; und
eine Konfiguration eines Übertragungsmodus.

17. Benutzergerät nach einem der Ansprüche 13 bis 16, wobei eine Frequenz, die dem MBMS-Dienst entspricht, der empfangen wird oder von Interesse ist, eine NCT-Frequenz ist; und
das Verarbeitungsmodul (111) spezifisch konfiguriert ist zum:
Einstellen, gemäß der Systemnachricht, der NCT-Frequenz auf eine höchste Priorität für die Zellenauswahl oder Wiederauswahl, die durch das UE durchgeführt wird; oder
Einstellen, gemäß der Systemnachricht, der LCT-Frequenz auf eine höchste Priorität für die Zellenauswahl oder Wiederauswahl, die durch das UE durchgeführt wird, wobei die LCT-Frequenz Unterstützung für die NCT-Frequenz bei der Unterstützung des MBMS-Dienstes bereitstellt; oder
Einstellen, gemäß der Systemnachricht, der NCT-Frequenz und der LCT-Frequenz auf eine höchste Priorität für die Zellenauswahl oder Wiederauswahl, die durch das UE durchgeführt wird, wobei die LCT-Frequenz Unterstützung für die NCT-Frequenz bei der Unterstützung des MBMS-Dienstes bereitstellt.

18. Benutzergerät nach einem der Ansprüche 13 bis 16, wobei eine Frequenz, die dem MBMS-Dienst entspricht, der empfangen wird oder von Interesse ist, eine NCT-Frequenz ist; und
das Verarbeitungsmodul (111) speziell konfiguriert ist zum:
Senden, gemäß der Systemnachricht, von MBMS-Anzeigeinformationen an die Basisstation, die der LCT-Zelle entspricht, wobei die MBMS-Anzeigeinformationen die NCT-Frequenz aufweisen.

19. Basisstation, die einem älteren Trägertyp entspricht, aufweisend:
ein Erzeugungsmodul (131), das konfiguriert ist, um eine Systemnachricht zu erzeugen, wobei die Systemnachricht Informationen über eine Frequenz eines neuen Trägertyps, NCT-Frequenz, und Informationen über eine Dienstbereichsidentität eines Multimedia-Broadcast-Multicast-Dienstes, MBMS-SAI, die den Informationen über die NCT-Frequenz entsprechen, aufweist; und
ein Sendemodul (132), das konfiguriert ist, um die Systemnachricht an das Benutzergerät, UE, zu senden, so dass das UE eine Anzeigeverarbeitung auf einem MBMS-Dienst durchführt, der empfangen wird oder von Interesse ist, wobei die Anzeigeverarbeitung mindestens eines von, in einem Ruhezustand des UE, einer Zellenauswahl oder Wiederauswahl auf der Basis der Informationen, die in der Systemnachricht enthalten sind, und, in einem verbundenen Zustand des UE, Senden, durch das UE, von MBMS-Anzeigeinformationen an die Basisstation, die der LCT-Zelle für die Zellenverbindungsübergabe entspricht, aufweist, wobei die MBMS-Anzeigeinformationen die NCT-Frequenz aufweisen, die dem MBMS-Dienst entspricht, der empfangen wird oder von Interesse ist, wobei die MBMS-Anzeigeinformationen auf den Informationen basieren, die in der Systemnachricht enthalten sind;
wobei Ressourcen der NCT-Frequenz alle verwendet werden, um den MBMS zu unterstützen, und wobei die NCT-Frequenz nicht konfiguriert ist, um unabhängig zu arbeiten, und die NCT-Frequenz eine Unterstützung der LCT-Zelle bei der Unterstützung des MBMS-Dienstes erfordert.

20. Basisstation, die einem älteren Trägertyp entspricht, nach Anspruch 19, wobei die Systemnachricht ferner mindestens einen Typ der folgenden Informationen aufweist:
Identitätsinformationen einer NCT-Zelle;
eine LCT-Frequenz, die Unterstützung für die NCT-Zelle oder die NCT-Frequenz bei der Unterstützung des MBMS-Dienstes bereitstellt; und
Identitätsinformationen einer LCT-Zelle, die Unterstützung für die NCT-Zelle oder die NCT-Frequenz bei der Unterstützung des MBMS-Dienstes bereitstellt.

21. Basisstation, die einem älteren Trägertyp nach Anspruch 19 oder 20 entspricht, wobei die Systemnachricht ferner Ressourcenanzeigeinformationen oder Ressourcenkonfigurationsinformationen aufweist.

22. Basisstation, die einem älteren Trägertyp entspricht, nach Anspruch 21, wobei die Ressourcenanzeigeinformationen mindestens einen Typ der folgenden Informationen aufweisen:
eine Anzeige einer Unterstützung von Mehrfacheingabe-Mehrfachausgabe;
eine Anzeige einer Unterstützung eines Referenzsignals; und
eine Anzeige einer Unterstützung eines Übertragungsmodus; und
die Ressourcenkonfigurationsinformationen mindestens einen Typ der folgenden Informationen aufweisen:
eine Konfiguration von Mehrfacheingabe-Mehrfachausgabe;
eine Konfiguration eines Referenzsignals; und
eine Konfiguration eines Übertragungsmodus.

23. Basisstation, die einem älteren Trägertyp entspricht, nach einem der Ansprüche 19 bis 22, wobei eine Frequenz, die dem MBMS-Dienst entspricht, der empfangen wird oder von Interesse ist, eine NCT-Frequenz ist; und
das Sendemodul (132) speziell konfiguriert ist zum:
Senden der Systemnachricht an das Benutzergerät, UE, so dass das UE im Ruhezustand gemäß der Systemnachricht die NCT-Frequenz auf eine höchste Priorität für die Zellenauswahl oder Wiederauswahl, die durch das UE durchgeführt wird, einstellt; oder
Senden der Systemnachricht an das Benutzergerät, UE, so dass das UE im Ruhezustand gemäß der Systemnachricht die LCT-Frequenz auf eine höchste Priorität für die Zellenauswahl oder Wiederauswahl, die durch das UE durchgeführt wird, einstellt, wobei die LCT-Frequenz Unterstützung für die NCT-Frequenz bei der Unterstützung des MBMS-Dienstes bereitstellt; oder
Senden der Systemnachricht an das Benutzergerät, UE, so dass das UE im Ruhezustand gemäß der Systemnachricht die NCT-Frequenz und die LCT-Frequenz auf eine höchste Priorität für die Zellenauswahl oder Wiederauswahl, die durch das UE durchgeführt wird, einstellt, wobei die LCT-Frequenz Unterstützung für die NCT-Frequenz bei der Unterstützung des MBMS-Dienstes bereitstellt.

24. Basisstation, die einem älteren Trägertyp entspricht, nach einem der Ansprüche 19 bis 22, wobei eine Frequenz, die dem MBMS-Dienst entspricht, der empfangen wird oder von Interesse ist, eine NCT-Frequenz ist; und
das Sendemodul (132) speziell konfiguriert ist zum:
Senden der Systemnachricht an das Benutzergerät, UE, so dass das UE im verbundenen Zustand gemäß der Systemnachricht MBMS-Anzeigeinformationen an die Basisstation, die der LCT-Zelle entspricht, sendet, wobei die MBMS-Anzeigeinformationen die NCT-Frequenz aufweisen.

## Revendications

1. Procédé de traitement d'indication de service, comprenant les étapes suivantes :
réception (S101), par un équipement utilisateur, dit UE, d'un message système transmis par une station de base correspondant à une cellule d'un type de porteuse existant, dit LCT, le message système comprenant des informations concernant une fréquence d'un nouveau type de porteuse, dit NCT, et des informations concernant une identité de zone de service d'un service de diffusion et de multidiffusion multimédia, dite SAI de MBMS, correspondant à la fréquence de NCT ; et
exécution (S102), par l'UE, d'un traitement d'indication sur un service MBMS en cours de réception ou présentant un intérêt, ledit traitement d'indication comprenant, dans un état de repos de l'UE, une sélection ou une resélection de cellule en fonction des informations contenues dans le message système et/ou, dans un état connecté de l'UE, la transmission, par l'UE, d'informations d'indication de MBMS à la station de base correspondant à la cellule de LCT en vue d'un transfert intercellulaire de cellule, lesdites informations d'indication de MBMS étant fonction des informations contenues dans le message système ;
dans lequel des ressources de la fréquence de NCT sont toutes utilisées pour la prise en charge du MBMS, et dans lequel la fréquence de NCT n'est pas configurée pour fonctionner seule et la fréquence de NCT requiert l'assistance de la cellule de LCT pour la prise en charge du service MBMS.

2. Procédé selon la revendication 1, dans lequel le message système comprend en outre au moins un type des informations suivantes :
des informations d'identité d'une cellule de NCT ;
une fréquence de LCT qui prête assistance à la cellule de NCT ou à la fréquence de NCT pour la prise en charge du service MBMS ; et
des informations d'identité d'une cellule de LCT qui prête assistance à la cellule de NCT ou à la fréquence de NCT pour la prise en charge du service MBMS.

3. Procédé selon la revendication 1 ou 2, dans lequel le message système comprend en outre des informations d'indication de ressources ou des informations de configuration de ressources.

4. Procédé selon la revendication 3, dans lequel les informations d'indication de ressources comprennent au moins un type des informations suivantes :
une indication de prise en charge multi-entrée multi-sortie ;
une indication de prise en charge d'un signal de référence ; et
une indication de prise en charge d'un mode de transfert ; et
les informations de configuration de ressources comprennent au moins un type des informations suivantes :
une configuration multi-entrée multi-sortie ;
une configuration d'un signal de référence ; et
une configuration d'un mode de transfert.

5. Procédé selon l'une quelconque des revendications 1 à 4, dans lequel une fréquence correspondant au service MBMS en cours de réception ou présentant un intérêt est une fréquence de NCT ; et
l'étape d'exécution (S 102), par l'UE, selon le message système, d'un traitement d'indication sur un service MBMS en cours de réception ou présentant un intérêt comprend les étapes suivantes :
assignation (S202), par l'UE dans l'état de repos, selon le message système, d'une priorité maximale à la fréquence de NCT pour la sélection ou la resélection de cellule exécutée par l'UE ; ou
assignation (S202), par l'UE dans l'état de repos, selon le message système, d'une priorité maximale à la fréquence de LCT pour la sélection ou la resélection de cellule exécutée par l'UE, la fréquence de LCT prêtant assistance à la fréquence de NCT pour la prise en charge du service MBMS ; ou
assignation (S202), par l'UE dans l'état de repos, selon le message système, d'une priorité maximale à la fréquence de NCT et à la fréquence de LCT pour la sélection ou la resélection de cellule exécutée par l'UE, la fréquence de LCT prêtant assistance à la fréquence de NCT pour la prise en charge du service MBMS.

6. Procédé selon l'une quelconque des revendications 1 à 4, dans lequel une fréquence correspondant au service MBMS en cours de réception ou présentant un intérêt est une fréquence de NCT ; et
l'étape d'exécution (S 102), par l'UE, selon le message système, d'un traitement d'indication sur un service MBMS en cours de réception ou présentant un intérêt comprend l'étape suivante :
transmission (S302), par l'UE dans l'état connecté, selon le message système, d'informations d'indication de MBMS à la station de base correspondant à la cellule de LCT, les informations d'indication de MBMS comprenant la fréquence de NCT.

7. Procédé de traitement d'indication de service, comprenant les étapes suivantes :
génération (S401), par une station de base correspondant à une cellule d'un type de porteuse existant, dit LCT, d'un message système, le message système comprenant des informations concernant une fréquence d'un nouveau type de porteuse, dit NCT, et des informations concernant une identité de zone de service d'un service de diffusion et de multidiffusion multimédia, dite SAI de MBMS, correspondant aux informations concernant la fréquence de NCT ; et
transmission (S402), par la station de base correspondant à la cellule de LCT, du message système à un équipement utilisateur, dit UE, de sorte que l'UE exécute, un traitement d'indication sur un service MBMS en cours de réception ou présentant un intérêt, un traitement d'indication sur un service MBMS en cours de réception ou présentant un intérêt, ledit traitement d'indication comprenant, dans un état de repos de l'UE, une sélection ou une resélection de cellule en fonction des informations contenues dans le message système et/ou, dans un état connecté de l'UE, la transmission, par l'UE, d'informations d'indication de MBMS à la station de base correspondant à la cellule de LCT en vue d'un transfert intercellulaire de cellule, lesdites informations d'indication de MBMS étant fonction des informations contenues dans le message système ;
dans lequel des ressources de la fréquence de NCT sont toutes utilisées pour la prise en charge du MBMS, et dans lequel la fréquence de NCT n'est pas configurée pour fonctionner seule et la fréquence de NCT requiert l'assistance de la cellule de LCT pour la prise en charge du service MBMS.

8. Procédé selon la revendication 7, dans lequel le message système comprend en outre au moins un type des informations suivantes :
des informations d'identité d'une cellule de NCT ;
une fréquence de LCT qui prête assistance à la cellule de NCT ou à la fréquence de NCT pour la prise en charge du service MBMS ; et
des informations d'identité d'une cellule de LCT qui prête assistance à la cellule de NCT ou à la fréquence de NCT pour la prise en charge du service MBMS.

9. Procédé selon la revendication 7 ou 8, dans lequel le message système comprend en outre des informations d'indication de ressources ou des informations de configuration de ressources.

10. Procédé selon la revendication 9, dans lequel les informations d'indication de ressources comprennent au moins un type des informations suivantes :
une indication de prise en charge multi-entrée multi-sortie ;
une indication de prise en charge d'un signal de référence ; et
une indication de prise en charge d'un mode de transfert ; et
les informations de configuration de ressources comprennent au moins un type des informations suivantes :
une configuration multi-entrée multi-sortie ;
une configuration d'un signal de référence ; et
une configuration d'un mode de transfert.

11. Procédé selon l'une quelconque des revendications 7 à 10, dans lequel une fréquence correspondant au service MBMS en cours de réception ou présentant un intérêt est une fréquence de NCT ; et
l'étape de transmission (S402), par la station de base correspondant à la cellule de LCT, du message système à un équipement utilisateur, dit UE, de sorte que l'UE exécute, selon le message système, un traitement d'indication sur un service MBMS en cours de réception ou présentant un intérêt comprend les étapes suivantes :
transmission (S502), par la station de base correspondant à la cellule de LCT, du message système à l'équipement utilisateur, dit UE, de sorte que l'UE dans l'état de repos assigne, selon le message système, une priorité maximale à la fréquence de NCT pour la sélection ou la resélection de cellule exécutée par l'UE ; ou
transmission (S502), par la station de base correspondant à la cellule de LCT, du message système à l'équipement utilisateur, dit UE, de sorte que l'UE dans l'état de repos assigne, selon le message système, une priorité maximale à la fréquence de LCT pour la sélection ou la resélection de cellule exécutée par l'UE, la fréquence de LCT prêtant assistance à la fréquence de NCT pour la prise en charge du service MBMS ; ou
transmission (S502), par la station de base correspondant à la cellule de LCT, du message système à l'équipement utilisateur, dit UE, de sorte que l'UE dans l'état de repos assigne, selon le message système, une priorité maximale à la fréquence de NCT et à la fréquence de LCT pour la sélection ou la resélection de cellule exécutée par l'UE, la fréquence de LCT prêtant assistance à la fréquence de NCT pour la prise en charge du service MBMS.

12. Procédé selon l'une quelconque des revendications 7 à 10, dans lequel une fréquence correspondant au service MBMS en cours de réception ou présentant un intérêt est une fréquence de NCT ; et
l'étape de transmission (S402), par la station de base correspondant à la cellule de LCT, du message système à l'équipement d'utilisateur, dit UE, de sorte que l'UE exécute, selon le message système, un traitement d'indication sur un service MBMS en cours de réception ou présentant un intérêt comprend l'étape suivante :
transmission (S602), par la station de base correspondant à la cellule de LCT, du message système à l'équipement utilisateur, dit UE, de sorte que l'UE dans l'état connecté transmette, selon le message système, des informations d'indication de MBMS à la station de base correspondant à la cellule de LCT, les informations d'indication de MBMS comprenant la fréquence de NCT.

13. Equipement utilisateur, comprenant :
un module de réception (111), configuré pour recevoir un message système transmis par une station de base correspondant à une cellule d'un type de porteuse existant, dit LCT, le message système comprenant des informations concernant une fréquence d'un nouveau type de porteuse, dit NCT, et des informations concernant une identité de zone de service d'un service de diffusion et de multidiffusion multimédia, dite SAI de MBMS, correspondant à la fréquence de NCT ; et
un module de traitement (112), configuré pour exécuter, un traitement d'indication sur un service MBMS en cours de réception ou présentant un intérêt, un traitement d'indication sur un service MBMS en cours de réception ou présentant un intérêt, ledit traitement d'indication comprenant, dans un état de repos de l'UE, une sélection ou une resélection de cellule en fonction des informations contenues dans le message système et/ou, dans un état connecté de l'UE, la transmission, par l'UE, d'informations d'indication de MBMS à la station de base correspondant à la cellule de LCT en vue d'un transfert intercellulaire de cellule, lesdites informations d'indication de MBMS étant fonction des informations contenues dans le message système ;
dans lequel des ressources de la fréquence de NCT sont toutes utilisées pour la prise en charge du MBMS, et dans lequel la fréquence de NCT n'est pas configurée pour fonctionner seule et la fréquence de NCT requiert l'assistance de la cellule de LCT pour la prise en charge du service MBMS.

14. Equipement utilisateur selon la revendication 13, dans lequel le message système comprend en outre au moins un type des informations suivantes :
des informations d'identité d'une cellule de NCT ;
une fréquence de LCT qui prête assistance à la cellule de NCT ou à la fréquence de NCT pour la prise en charge du service MBMS ; et
des informations d'identité d'une cellule de LCT qui prête assistance à la cellule de NCT ou à la fréquence de NCT pour la prise en charge du service MBMS.

15. Equipement utilisateur selon la revendication 13 ou 14, dans lequel le message système comprend en outre des informations d'indication de ressources ou des informations de configuration de ressources.

16. Equipement utilisateur selon la revendication 15, dans lequel les informations d'indication de ressources comprennent au moins un type des informations suivantes :
une indication de prise en charge multi-entrée multi-sortie ;
une indication de prise en charge d'un signal de référence ; et
une indication de prise en charge d'un mode de transfert ; et
les informations de configuration de ressources comprennent au moins un type des informations suivantes :
une configuration multi-entrée multi-sortie ;
une configuration d'un signal de référence ; et
une configuration d'un mode de transfert.

17. Equipement utilisateur selon l'une quelconque des revendications 13 à 16, dans lequel une fréquence correspondant au service MBMS en cours de réception ou présentant un intérêt est une fréquence de NCT ; et
le module de traitement (111) est plus particulièrement configuré pour :
assigner, selon le message système, une priorité maximale à la fréquence de NCT pour la sélection ou la resélection de cellule exécutée par l'UE ; ou
assigner, selon le message système, une priorité maximale à la fréquence de LCT pour la sélection ou la resélection de cellule exécutée par l'UE, la fréquence de LCT prêtant assistance à la fréquence de NCT pour la prise en charge du service MBMS ; ou
assigner, selon le message système, une priorité maximale à la fréquence de NCT et à la fréquence de LCT pour la sélection ou la resélection de cellule exécutée par l'UE, la fréquence de LCT prêtant assistance à la fréquence de NCT pour la prise en charge du service MBMS.

18. Equipement utilisateur selon l'une quelconque des revendications 13 à 16, dans lequel une fréquence correspondant au service MBMS en cours de réception ou présentant un intérêt est une fréquence de NCT ; et
le module de traitement (111) est plus particulièrement configuré pour :
transmettre, selon le message système, des informations d'indication de MBMS à la station de base correspondant à la cellule de LCT, les informations d'indication de MBMS comprenant la fréquence de NCT.

19. Station de base correspondant à un type de porteuse existant, comprenant :
un module de génération (131), configuré pour générer un message système, le message système comprenant des informations concernant une fréquence d'un nouveau type de porteuse, dit NCT, et des informations concernant une identité de zone de service d'un service de diffusion et de multidiffusion multimédia, dite SAI de MBMS, correspondant aux informations concernant la fréquence de NCT ; et
un module de transmission (132), configuré pour transmettre le message système à un équipement utilisateur, dit UE, de sorte que l'UE exécute un traitement d'indication sur un service MBMS en cours de réception ou présentant un intérêt, ledit traitement d'indication comprenant, dans un état de repos de l'UE, une sélection ou une resélection de cellule en fonction des informations contenues dans le message système et/ou, dans un état connecté de l'UE, la transmission, par l'UE, d'informations d'indication de MBMS à la station de base correspondant à la cellule de LCT en vue d'un transfert intercellulaire de cellule, les informations d'indication de MBMS comprenant la fréquence de NCT correspondant au service MBMS en cours de réception ou présentant un intérêt, lesdites informations d'indication de MBMS étant fonction des informations contenues dans le message système ;
dans laquelle des ressources de la fréquence de NCT sont toutes utilisées pour la prise en charge du MBMS, et dans laquelle la fréquence de NCT n'est pas configurée pour fonctionner seule et la fréquence de NCT requiert l'assistance de la cellule de LCT pour la prise en charge du service MBMS.

20. Station de base correspondant à un type de porteuse existant selon la revendication 19, dans laquelle le message système comprend en outre au moins un type des informations suivantes :
des informations d'identité d'une cellule de NCT ;
une fréquence de LCT qui prête assistance à la cellule de NCT ou à la fréquence de NCT pour la prise en charge du service MBMS ; et
des informations d'identité d'une cellule de LCT qui prête assistance à la cellule de NCT ou à la fréquence de NCT pour la prise en charge du service MBMS.

21. Station de base correspondant à un type de porteuse existant selon la revendication 19 ou 20, dans laquelle le message système comprend en outre des informations d'indication de ressources ou des informations de configuration de ressources.

22. Station de base correspondant à un type de porteuse existant selon la revendication 21, dans laquelle les informations d'indication de ressources comprennent au moins un type des informations suivantes :
une indication de prise en charge multi-entrée multi-sortie ;
une indication de prise en charge d'un signal de référence ; et
une indication de prise en charge d'un mode de transfert ; et
les informations de configuration de ressources comprennent au moins un type des informations suivantes :
une configuration multi-entrée multi-sortie ;
une configuration d'un signal de référence ; et
une configuration d'un mode de transfert.

23. Station de base correspondant à un type de porteuse existant selon l'une quelconque des revendications 19 à 22, dans laquelle une fréquence correspondant au service MBMS en cours de réception ou présentant un intérêt est une fréquence de NCT ; et le module de transmission (132) est plus particulièrement configuré pour :
transmettre le message système à l'équipement utilisateur, dit UE, de sorte que l'UE dans l'état de repos assigne, selon le message système, une priorité maximale à la fréquence de NCT pour la sélection ou la resélection de cellule exécutée par l'UE ; ou
transmettre le message système à l'équipement utilisateur, dit UE, de sorte que l'UE dans l'état de repos assigne, selon le message système, une priorité maximale à la fréquence de LCT pour la sélection ou la resélection de cellule exécutée par l'UE, la fréquence de LCT prêtant assistance à la fréquence de NCT pour la prise en charge du service MBMS ; ou
transmettre le message système à l'équipement utilisateur, dit UE, de sorte que l'UE dans l'état de repos assigne, selon le message système, une priorité maximale à la fréquence de NCT et à la fréquence de LCT pour la sélection ou la resélection de cellule exécutée par l'UE, la fréquence de LCT prêtant assistance à la fréquence de NCT pour la prise en charge du service MBMS.

24. Station de base correspondant à un type de porteuse existant selon l'une quelconque des revendications 19 à 22, dans laquelle une fréquence correspondant au service MBMS en cours de réception ou présentant un intérêt est une fréquence de NCT ; et le module de transmission (132) est plus particulièrement configuré pour :
transmettre le message système à l'équipement utilisateur, dit UE, de sorte que l'UE dans l'état connecté transmette, selon le message système, des informations d'indication de MBMS à la station de base correspondant à la cellule de LCT, les informations d'indication de MBMS comprenant la fréquence de NCT.
